# EUROPÄISCHE PATENTSCHRIFT

(11) **EP 1 579 968 B1**
(45) Veröffentlichungstag und Bekanntmachung des Hinweises auf die Patenterteilung: **03.01.2007**
(21) Anmeldenummer: 05101941.2
(22) Anmeldetag: 14.03.2005
(51) Int. Cl.: B28D 1/04, B23Q 9/00

(54) **Schienengeführtes Werkzeuggerät**
Rail guided tool
Outil guidé sur rails

(30) Priorität: 24.03.2004 DE 102004014837
(43) Veröffentlichungstag der Anmeldung: 28.09.2005
(73) Patentinhaber: HILTI Aktiengesellschaft, 9494 Schaan (LI)
(72) Erfinder: Schittl, Josef, 6712 Thüringen (AT); Werder, Bruno, 9487 Gamprin (LI)
(74) Vertreter: Wildi, Roland

(56) Entgegenhaltungen:
- US-A- 5 588 418

## Beschreibung

### Technisches Gebiet

Die Erfindung betrifft ein schienengeführtes Werkzeuggerät, wie ein Säge-, Schlitz- oder Bohrgerät, mit zumindest einem Traggriff und mit einer auf einem Schlitten angeordneten Geräteeinheit. Der Schlitten weist für einen Eingriff mit einer Führungsschiene Führungsrollen auf. Zumindest eine der Führungsrollen ist über eine mittels des zumindest einen Traggriffs betätigbaren Verstelleinrichtung von einer Eingriffsposition, in der die zumindest eine Führungsrolle mit der Führungsschiene in Eingriff steht, in eine Löseposition bewegbar, in der die zumindest eine Führungsrolle von der Führungsschiene beabstandet ist und das Werkzeuggerät von der Führungsschiene entfernbar beziehungsweise an dieser anordnenbar ist. Der zumindest eine Traggriff weist eine Entriegelungseinrichtung gegen ein unbeabsichtigtes Betätigen der Verstelleinrichtung in einer Verriegelungsposition auf.

### Stand der Technik

Beispielsweise zum Erstellen von Öffnungen in bestehenden Bauteilen, z. B. in Bauteilen aus Beton oder anderen harten Materialien, kommen als Werkzeuggeräte Sägegeräte zur Anwendung, welche an einer Führungsschiene angeordnet werden und genau positioniert den gewünschten Schnitt im Bauteil erstellen. Zum Erstellen von längeren Schlitzen und zur Einhaltung von minimalen Toleranzen werden als Werkzeuggeräte ausgebildete Schlitzgeräte an einer Führungsschiene angeordnet. Müssen mehrere Bohrungen in einer Reihe angeordnet erstellt werden, kommen als Werkzeuggeräte Bohrgeräte zum Einsatz, welche ebenfalls an einer Führungsschiene angeordnet werden können.

Zuerst werden die Führungsschienen an einer von dem zu bearbeitenden Bauteil aufgespannten Ebene befestigt und anschliessend wird das Werkzeuggerät an dieser angeordnet. Dazu müssen sich die Führungsrollen am Schlitten in einer Löseposition befinden, in welcher das Werkzeuggerät über die Auflagefläche der Führungsschiene geschoben werden kann.

Mittels einer Verstelleinrichtung wird zumindest eine der Führungsrollen in Richtung zur Führungsschiene bewegt, so dass die Führungsrollen sich mit der Lauffläche der Führungsschiene in einer Eingriffposition befinden. Mittels der Verstelleinrichtung wird die zumindest eine Führungsrolle von der Eingriffsposition in die Löseposition gebracht, um das Werkzeuggerät wieder von der Führungsschiene entfernen zu können. Der zumindest eine Traggriff ermöglicht das Halten des Werkzeuggerätes bei der Montage wie auch bei der Demontage desselben an beziehungsweise von der Führungsschiene.

Zur Betätigung der Verstelleinrichtung wird beispielsweise an den von der Führungsschiene hin- und wegbewegbaren Führungsrollen jeweils ein separater, um die Achse der entsprechenden Führungsrolle schwenkbarer Hebel angeordnet, welcher z. B. über einen Excenter die Führungsrolle in die gewünschte Position bewegt. Nachteilig an der bekannten Lösung ist, dass zum Verstellen der Führungsrollen der Anwender zumindest einen der Traggriffe loslassen muss. Da die gattungsgemässen Werkzeuggeräte ein nicht zu unterschätzendes Gewicht aufweisen, verlangt die Anordnung des Werkzeuggerätes an der Führungsschiene bei der bekannten Ausführung ein gewisses Geschick und ausreichende Kraft.

Aus der US 5,588,418 A ist ein Sägegerät bekannt, bei dem ein Traggriff zudem der Betätigung der Verstelleinrichtung für zwei einander gegenüberliegenden Führungsrollen dient. An dem Traggriff ist eine Entriegelungseinrichtung gegen ein unbeabsichtigtes Betätigen der Verstelleinrichtung in einer Verriegelungsposition vorgesehen. Die Entriegelungseinrichtung umfasst einen in der Verriegelungsposition mittels eines Federelementes vorgespannten Sicherungsstift mit einem Betätigungsabschnitt, wobei der Sicherungsstift in Bohrungen am Werkzeuggerät eingreift. Bei der Betätigung des Betätigungsabschnitts wird der Sicherungsstift aus einer der Bohrungen herausgezogen, so dass der Traggriff um eine Drehachse schwenkbar ist und die Verstelleinrichtung die Führungsrollen in die Eingriffsposition beziehungsweise in die Löseposition bewegt. Beim Loslassen des Betätigungsabschnitts greift der Sicherungsstift in die nächstgelegene Bohrung am Werkzeuggerät ein und der Traggriff sowie die Verstelleinrichtung sind in dieser Position gegen ein unbeabsichtigtes Betätigen der Verstelleinrichtung gesichert.

Nachteilig an dieser Lösung ist, dass der Befestigungsabschnitt für eine einfache Zugänglichkeit am Traggriff auch versehentlich betätigt werden kann, was im unglücklichsten Fall zu einer unbeabsichtigten Betätigung der Verstelleinrichtung führt. Zudem ist die Entriegelungseinrichtung nicht staubgeschützt, so dass anfallender Staub die Funktionsfähigkeit der Entriegelungseinrichtung nachteilig beeinflussen kann.

### Darstellung der Erfindung

Aufgabe der Erfindung ist es, ein schienengeführtes Werkzeuggerät zu schaffen, das zumindest einen Traggriff zur Betätigung der Verstelleinrichtung für die Führungsrollen mit einer Entriegelungseinrichtung aufweist, wobei das schienengeführte Werkzeuggerät einfach händelbar und sicher in der Anwendung ist.

Die Aufgabe ist durch die Merkmale des unabhängigen Anspruchs gelöst. Vorteilhafte Weiterbildungen sind in den Unteransprüchen dargelegt.

Gemäss der Erfindung weist die Entriegelungseinrichtung ein um die Achse eines Abschnitts des Traggriffs drehbares Betätigungsmittel, ein Übertragungsmittel und ein Entriegelungsmittel auf, wobei die Drehbewegung des Betätigungsmittels über das Übertragungsmittel auf das Entriegelungsmittel übertragbar ist.

Das drehbare Betätigungsmittel ist vorteilhafterweise bei einem gleichzeitigen Umgreifen des Traggriffs einfach bedienbar. Damit wird ein sicheres Handling des Werkzeuggerätes gewährleistet. Zudem kann das Übertragungsmittel und das Entriegelungsmittel sowie auch ein grosser Teil des Betätigungsmittels im Traggriff staubgeschützt angeordnet sein, so dass die Funktionsfähigkeit der Entriegelungseinrichtung auch bei erschwerenden Umgebungsverhältnissen sichergestellt ist.

Die Verstelleinrichtung der Führungsrollen wird beispielsweise durch Schwenken des Traggriffs im entriegelten Zustand desselben betätigt. In einer Variante dazu wirkt das Übertragungsmittel nicht nur auf das Entriegelungsmittel, sondern auch direkt auf die Verstelleinrichtung, so dass bei der Betätigung des Betätigungsmittels gleichzeitig die Verstelleinrichtung für die Führungsrollen betätigt wird.

Vorzugsweise weist das Betätigungsmittel ein drehfest mit einem Steuerungsteil verbundenes Drehstück auf, wobei das Übertragungsmittel mit dem Steuerungsteil verbunden ist. Das Drehstück weist vorteilhafterweise eine perforierte, z. B. eine gummierte Oberfläche auf, welche die manuelle Betätigung des Drehstücks vereinfacht. Das drehfest mit dem Drehstück und mit dem Übertragungsmittel verbundene Steuerungsteil ist vorzugsweise derart ausgebildet, dass eine geringe Drehbetätigung des Drehstücks ausreicht, um das Entriegelungsmittel zu betätigen und somit den Traggriff zu entriegeln.

Bevorzugt weist das Drehstück einen im Wesentlichen senkrecht zur Achse eines Abschnitts des Traggriffs abragenden Stellteil auf. Das Drehstück weist im Längsschnitt beispielsweise eine L-förmige Ausgestaltung ähnlich eines Horns auf. Das Drehstück kann über den abragenden Stellteil mit einem Finger, z. B. dem Daumen, betätigt werden, so dass die übrigen Finger den Traggriff weiterhin sicher umgreifen und somit das Werkzeuggerät bei der Anordnung an der Führungsschiene sicher gehalten werden kann.

Vorteilhafterweise weist das Entriegelungsmittel zumindest ein Rastelement und ein mit dem Übertragungsmittel verbundenes Gegenrastelement auf. Das zumindest eine Rastelement ist beispielsweise als eine Kugel ausgebildet, welche in einer Ausnehmung am Traggriff angeordnet ist, und bevorzugt federbeaufschlagt ist. Das Gegenrastelement, beispielsweise ein Rastbolzen, drückt im verriegelten Zustand des Traggriffs das zumindest eine Rastelement in eine Ausnehmung im Gehäuse des Werkzeuggerätes, wobei der Traggriff verriegelt ist. Zum Entriegeln des Traggriffs wird das Gegenrastelement bei der Betätigung des Betätigungsmittels von dem Übertragungsmittel derart verschoben, dass das Rastelement aus der Ausnehmung im Gehäuse des Werkzeuggerätes herausgleitet und die Verriegelung des Traggriffs aufhebt. Beim Loslassen des Betätigungsmittels wird das Gegenrastelement in seine ursprüngliche Position verschoben und das Rastelement wieder in eine Ausnehmung im Gehäuse des Werkzeuggerätes verschoben, so dass der Traggriff erneut in der entsprechenden Position verriegelt ist. Alternativ zu einer Kugel kann das Rastelement z. B. auch als zylindrischer Stift oder walzenartig ausgebildet sein.

Weiter vorteilhaft ist an dem Gegenrastelement eine Führungsbahn für das zumindest eine Rastelement vorgesehen. Mit der Führungsbahn, wie z. B. einer Kulisse, ist eine gesteuerte Bewegung des Rastelementes beim Ver- und Entriegeln während der Betätigung der Entriegelungseinrichtung gewährleistet.

Das Gegenrastelement ist vorzugsweise in der Verriegelungsposition mittels zumindest eines Federelementes vorgespannt. Mit dem zumindest einen Federelement wird die Rückstellbewegung des Gegenrastelementes bei dessen Rückstellung vorteilhaft unterstützt. Das Federelement umfasst beispielsweise eine Schraubenfeder oder mehrere Tellerfedern, welche zur Schaffung einer ausreichenden Federkraft hintereinander angeordnet werden. Alternativ kann das Federelement ein hydraulischer oder pneumatischer Kolbenzylinder sein.

Bevorzugt ist das Übertragungsmittel ein Bowdenzug. Umfasst das Betätigungsmittel ein Drehstück und ein drehfest mit diesem verbundenes Steuerungsteil, so ist das Steuerungsteil vorteilhafterweise als Kulissenstück ausgebildet. Umfasst das Entriegelungsmittel als Gegenrastelement einen Rastbolzen wird dieser von dem Bowdenzug zur Entriegelung des Traggriffs z. B. zurückgezogen.

In einer Variante dazu ist das Übertragungsmittel als Kardangelenke aufweisende Gelenkwelle ausgebildet, über die das Entriegelungsmittel betätigbar ist. In einer weiteren Variante umfasst das Übertragungsmittel anstelle einer mechanischen Lösung eine elektrische oder elektronische Einrichtung. Das Steuerungsteil umfasst beispielsweise einen Sensor und eine Elektronik, welche bei der Betätigung einen Stellmotor ansteuert, der seinerseits das Entriegelungsmittel betätigt.

Vorteilhaft bei allen Varianten des Übertragungsmittels ist die Möglichkeit, dieses im Traggriff vor äusseren Einflüssen und insbesondere vor Staub weitgehend geschützt anzuordnen. Eine allfällig zwischen dem drehbaren Betätigungsmittel und dem eigentlichen Traggriff vorhandene Fuge kann mit einer Dichteinlage vor eindringendem und die Funktionsfähigkeit der Entriegelungseinrichtung beeinträchtigendem Staub oder Feuchtigkeit geschützt werden.

Vorteilhafterweise ist der Traggriff im Wesentlichen U-förmig mit einem ersten Schenkel und einem zweiten Schenkel sowie mit einem die beiden Schenkel verbindenden Verbindungsabschnitt ausgebildet. Diese Ausgestaltung des Traggriffs erlaubt verschiedene Griffpositionen an dem Werkzeuggerät, was das Handling desselben zusätzlich verbessert.

Vorzugsweise ist das Betätigungsmittel am freien Endbereich des ersten Schenkels und das Entriegelungsmittel im freien Endbereich des zweiten Schenkels des Traggriffs vorgesehen. Diese Anordnung erlaubt einfache konstruktive Ausbildungen der einzelnen Bestandteile der Entriegelungseinrichtung. In einer Variante dazu ist beispielsweise das Betätigungsmittel und das Entriegelungsmittel am beziehungsweise im freien Endbereich des ersten Schenkels angeordnet.

Bevorzugt weist der zweite Schenkel des Traggriffs eine parallel zu der von dem Bauteil aufgespannten Ebene verlaufende Drehachse für den Traggriff auf. Diese Anordnung erlaubt einfache konstruktive Ausbildung des Werkzeuggerätes.

Aus der nachfolgenden Detailbeschreibung und der Gesamtheit der Patentansprüche ergeben sich weitere vorteilhafte Ausführungsformen und Merkmalskombinationen.

### Kurze Beschreibung der Zeichnungen

Die Erfindung wird nachstehend anhand eines Ausführungsbeispieles näher erläutert. Es zeigen:
- Fig. 1: Eine Aufsicht auf ein erfindungsgemässes Sägegerät;
- Fig. 2: eine Seitenansicht auf das erfindungsgemässe Sägegerät entlang der Linie II-II in Fig. 1; und
- Fig. 3: einen Schnitt durch den Traggriff.

Grundsätzlich sind in den Figuren gleiche Teile mit den gleichen Bezugszeichen versehen.

### Wege zur Ausführung der Erfindung

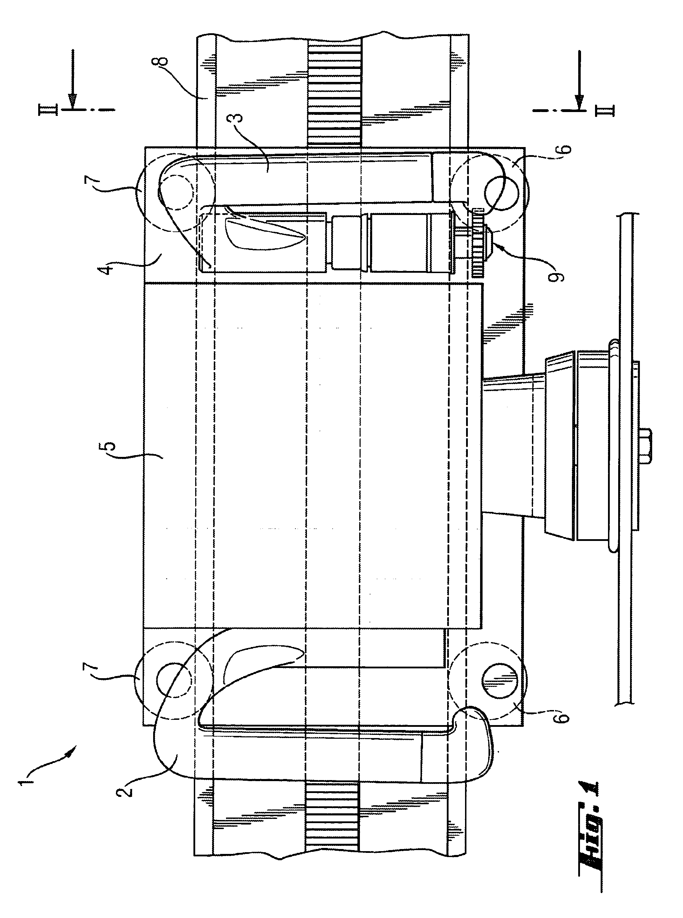

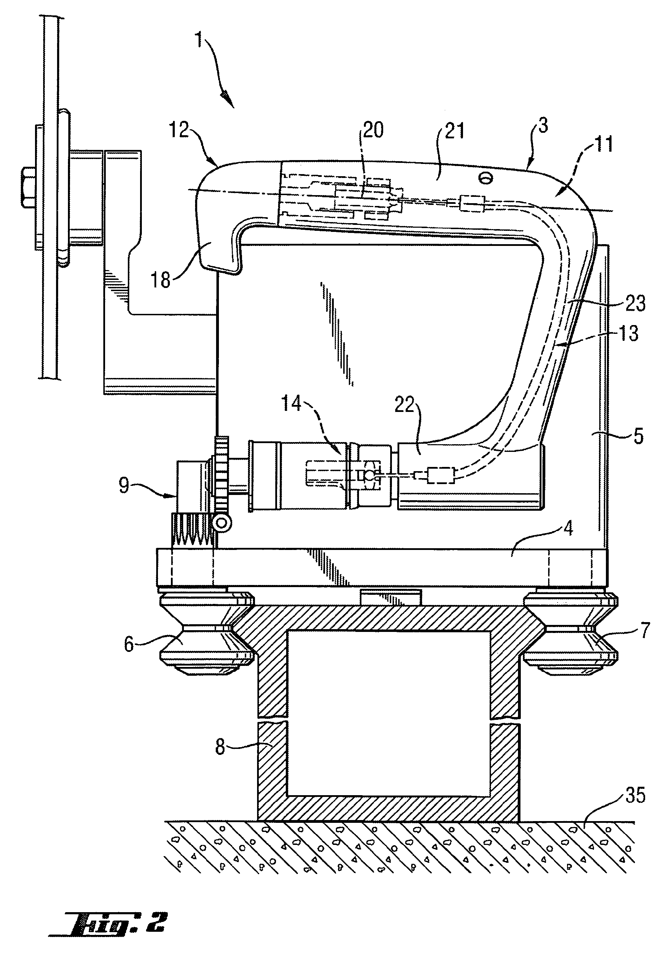

Das in den Fig. 1 bis Fig. 3 dargestellte, erfindungsgemässe schienengeführte Werkzeuggerät 1 ist ein Sägegerät mit zwei Traggriffen 2, 3 und mit einer auf einem Schlitten 4 angeordneten Geräteeinheit 5. Für die Erstellung einer Öffnung in einem betonierten Bauteil 35 wird eine Führungsschiene 8 vorgängig an diesem befestigt.

Der Schlitten 4 des Werkzeuggerätes 1 weist für einen Eingriff mit der Führungsschiene 8 Führungsrollen 6, 7 auf. Die Führungsrollen 6 sind mittels einer Verstelleinrichtung 9 von einer Eingriffsposition, in der das Werkzeuggerät 1 sicher an der Führungsschiene 8 geführt ist, in eine Löseposition bewegbar, in der das Werkzeuggerät 1 von der Führungsschiene 8 entfernt beziehungsweise an dieser angeordnet werden kann. Über den Traggriff 3 wird die Verstelleinrichtung 9 betätigt. Der Traggriff 3 weist eine Entriegelungseinrichtung 11 auf, die ein unbeabsichtigtes Betätigen der Verstelleinrichtung 9 in einer Verriegelungsposition verhindert.

Der Traggriff 3 ist im Wesentlichen U-förmig ausgebildet und weist einen ersten Schenkel 21, einen zweiten Schenkel 22 sowie einen den ersten Schenkel 21 und den zweiten Schenkel 22 verbindenden Verbindungsabschnitt 23 auf. Die im beziehungsweise am Traggriff 3 angeordnete Entriegelungseinrichtung 11 beinhaltet ein um die Achse 20 eines als erster Schenkel 21 ausgebildeten Abschnitts des Traggriffs 3 drehbares Betätigungsmittel 12, ein Übertragungsmittel 13 und ein Entriegelungsmittel 14. Eine Drehbewegung des Betätigungsmittels 12 wird über das Übertragungsmittel 13 auf das Entriegelungsmittel 14 übertragen.

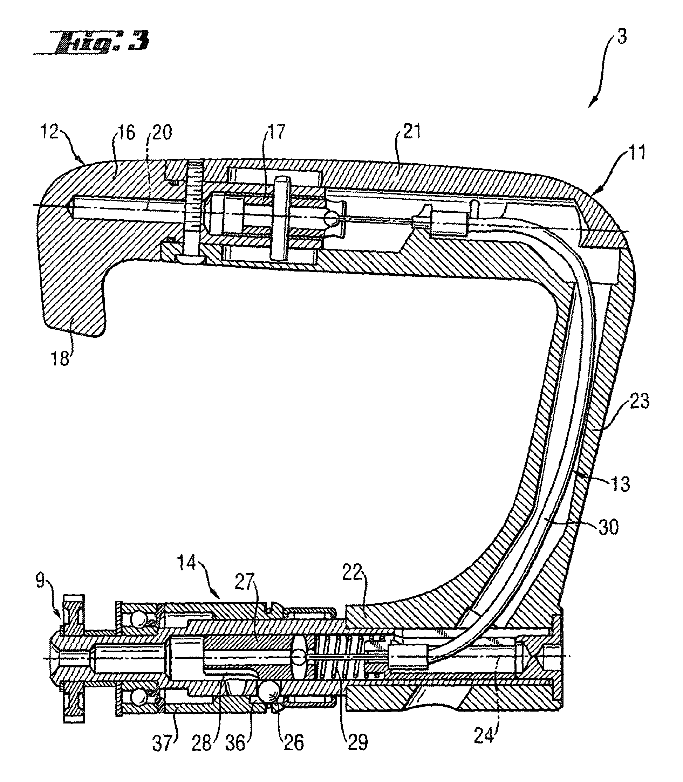

Das Betätigungsmittel 12 ist am freien Endbereich des ersten Schenkels 21 des Traggriffs 3 angeordnet und umfasst, wie insbesondere aus der Fig. 3 ersichtlich, ein drehfest mit einem Drehstück 16 verbundenes Steuerungsteil 17. Für eine Betätigung des Drehstücks 16 mit einem Finger ist an dem Drehstück 16 ein im Wesentlichen senkrecht zur Achse 20 des als erster Schenkel 21 ausgebildeten Abschnitts des Traggriffs 3 abragendes Stellteil 18 ausgebildet.

Das Entriegelungsmittel 14 ist im freien Endbereich des zweiten Schenkels 22 des Traggriffs 3 angeordnet und umfasst ein als Kugel ausgebildetes Rastelement 26, welches mit einem als Rastbolzen ausgebildeten Gegenrastelement 27 zusammenwirkt.

Das Übertragungsmittel 13 ist ein Bowdenzug 30, der einerseits mit dem Steuerungsteil 17 des Betätigungsmittels 12 und andererseits mit dem Gegenrastelement 27 verbunden ist. Das Steuerungsteil 17 ist als ein Kulissenstück ausgebildet, so dass bei einer Betätigung des Drehstücks 16 das Gegenrastelement 27 des Entriegelungsmittels 14 in Richtung des Verbindungsabschnitts 23 des Traggriffs 3 verschoben beziehungsweise gezogen wird.

Das Gegenrastelement 27 wird dabei soweit zurückgezogen, dass das Rastelement 26 aus einer Ausnehmung 36 des Gehäuses 37 des Werkzeuggerätes 1 herausgleiten kann und die Verriegelung des Traggriffs 3 freigibt. Durch die an dem Gegenrastelement 27 vorgesehene Führungsbahn 28 für das Rastelement 26 gleitet dieses gesteuert aus der Ausnehmung 36 des Gehäuses 37 heraus. Der Traggriff 3 kann um die Drehachse 24 verschwenkt werden, wobei die Verstelleinrichtung 9 betätigt wird. Beim Rückstellen des Drehstücks 16 beziehungsweise beim Loslassen desselben wird das Gegenrastelement 27 mittels einer als Federelement 29 dienenden Schraubenfeder in die Verriegelungsposition zurückgeschoben und ist in dieser Position vorgespannt gehalten. Beim Zurückschieben des Gegenrastelementes 27 zwingt dieses das Rastelement 26 erneut nach aussen, wobei das Rastelement 26 in der Ausnehmung 36 oder einer radial versetzt zu dieser angeordneten weiteren Ausnehmung im Gehäuse 37 des Werkzeuggerätes 1 in Eingriff kommt und der Traggriff 3 in dieser Position gesichert ist.

## Patentansprüche

1. Schienengeführtes Werkzeuggerät, wie ein Säge-, Schlitz- oder Bohrgerät, mit zumindest einem Traggriff (2, 3) und mit einer auf einem Schlitten (4) angeordneten Geräteeinheit (5), wobei der Schlitten (4) für einen Eingriff mit einer Führungsschiene (8) Führungsrollen (6, 7) aufweist, wobei zumindest eine der Führungsrollen (6) über eine mittels des zumindest einen Traggriffs (3) betätigbaren Verstelleinrichtung (9) von einer Eingriffsposition, in der die zumindest eine Führungsrolle (6) mit der Führungsschiene (8) in Eingriff steht, in eine Löseposition bewegbar ist, in der die zumindest eine Führungsrolle (6) von der Führungsschiene (8) beabstandet ist und das Werkzeuggerät (1) von der Führungsschiene (8) entfernbar beziehungsweise an dieser anordnenbar ist, wobei der zumindest eine Traggriff (3) eine Entriegelungseinrichtung (11) gegen ein unbeabsichtigtes Betätigen der Verstelleinrichtung (9) in einer Verriegelungsposition aufweist, **dadurch gekennzeichnet, dass** die Entriegelungseinrichtung (11) ein um die Achse (20) eines Abschnitts des Traggriffs (3) drehbares Betätigungsmittel (12), ein Übertragungsmittel (13) und ein Entriegelungsmittel (14) aufweist, wobei die Drehbewegung des Betätigungsmittels (12) über das Übertragungsmittel (13) auf das Entriegelungsmittel (14) übertragbar ist.

2. Werkzeuggerät nach Anspruch 1, **dadurch gekennzeichnet, dass** das Betätigungsmittel (12) ein drehfest mit einem Steuerungsteil (17) verbundenes Drehstück (16) aufweist, wobei das Übertragungsmittel (13) mit dem Steuerungsteil (17) verbunden ist.

3. Werkzeuggerät nach Anspruch 2, **dadurch gekennzeichnet, dass** das Drehstück (16) einen im Wesentlichen senkrecht zur Achse (20) eines Abschnitts des Traggriffs (3) abragenden Stellteil (18) aufweist.

4. Werkzeuggerät nach einem der Ansprüche 1 bis 3, **dadurch gekennzeichnet, dass** das Entriegelungsmittel (14) zumindest ein Rastelement (26) und ein mit dem Übertragungsmittel (13) verbundenes Gegenrastelement (27) aufweist, wobei optional an dem Gegenrastelement (27) eine Führungsbahn (28) für das zumindest eine Rastelement (26) vorgesehen ist.

5. Werkzeuggerät nach Anspruch 4, **dadurch gekennzeichnet, dass** das Gegenrastelement (27) in der Verriegelungsposition mittels zumindest einem Federelement (29) vorgespannt ist.

6. Werkzeuggerät nach einem der Ansprüche 1 bis 5, **dadurch gekennzeichnet, dass** das Übertragungsmittel (13) ein Bowdenzug (30) ist.

7. Werkzeuggerät nach einem der Ansprüche 1 bis 6, **dadurch gekennzeichnet, dass** der zumindest eine Traggriff (3) im Wesentlichen U-förmig mit einem ersten Schenkel (21) und einem zweiten Schenkel (22) sowie mit einem die beiden Schenkel (21, 22) verbindenden Verbindungsabschnitt (23) ausgebildet ist.

8. Werkzeuggerät nach Anspruch 7, **dadurch gekennzeichnet, dass** das Betätigungsmittel (12) am freien Endbereich des ersten Schenkels (21) und das Entriegelungsmittel (14) am freien Endbereich des zweiten Schenkels (22) des Traggriffs (3) vorgesehen ist.

9. Werkzeuggerät nach Anspruch 7 oder 8, **dadurch gekennzeichnet, dass** der zweite Schenkel (22) des Traggriffs (3) eine parallel zu der von dem Bauteil (35) aufgespannten Ebene verlaufende Drehachse (24) für den Traggriff (3) aufweist.

## Claims

1. Rail-guided tool, such as a saw, slotter or drill, comprising at least one handle (2, 3) and a tool unit (5) arranged on a carriage (4), wherein the carriage (4) has guide rollers (6, 7) for engagement with a guide rail (8), at least one of the guide rollers (6) can be moved via an adjusting device (9) which can be actuated by means of the at least one handle (3) from an engagement position in which the at least one guide roller (6) is in engagement with the guide rail (8) to a release position in which the at least one guide roller (6) is at a distance from the guide rail (8) and the tool (1) can be removed from the guide rail (8) or arranged thereon, and the at least one handle (3) has an unlocking device (11) to prevent accidental actuation of the adjusting device (9) in a locking position, **characterised in that** the unlocking device (11) has an actuating means (12) which can be rotated about the axis (20) of a portion of the handle (3), a transmission means (13) and an unlocking means (14), wherein the rotational movement of the actuating means (12) can be transmitted to the unlocking means (14) via the transmission means (13).

2. Tool according to claim 1, **characterised in that** the actuating means (12) has a rotating part (16) connected in a torsion-resistant manner to a control part (17), the transmission means (13) being connected to the control part (17).

3. Tool according to claim 2, **characterised in that** the rotating part (16) has an operating part (18) projecting substantially perpendicularly to the axis (20) of a portion of the handle (3).

4. Tool according to one of claims 1 to 3, **characterised in that** the unlocking means (14) has at least one snap-in element (26) and a mating snap-in element (27) connected to the transmission means (13), a guideway (28) for the at least one snap-in element (26) optionally being provided on the mating snap-in element (27).

5. Tool according to claim 4, **characterised in that** the mating snap-in element (27) is preloaded in the locking position by means of at least one spring element (29).

6. Tool according to one of claims 1 to 5, **characterised in that** the transmission means (13) is a Bowden cable (30).

7. Tool according to one of claims 1 to 6, **characterised in that** the at least one handle (3) is essentially U-shaped with a first leg (21) and a second leg (22) and a connecting portion (23) connecting the two legs (21, 22).

8. Tool according to claim 7, **characterised in that** the actuating means (12) is provided at the free end region of the first leg (21) and the unlocking means (14) is provided at the free end region of the second leg (22) of the handle (3).

9. Tool according to claim 7 or claim 8, **characterised in that** the second leg (22) of the handle (3) has an axis of rotation (24) for the handle (3) extending parallel to the plane spanned by the component (35).

## Revendications

1. Outil guidé sur rail, tel qu'outil de sciage, de rainurage ou de forage, comprenant au moins une poignée de manutention (2, 3) et un module d'outil (5) disposé sur un chariot (4), le chariot (4) comportant des galets de guidage (6, 7) destinés à venir en prise avec un rail de guidage (8), au moins un des galets de guidage (6) étant déplaçable, par l'intermédiaire d'un dispositif de réglage (9) actionnable au moyen de la poignée de manutention (3) au nombre d'au moins une, d'une position de prise, dans laquelle le galet de guidage au nombre d'au moins un (6) est en prise avec le rail de guidage (8), à une position libérée dans laquelle le galet de guidage au nombre d'au moins un (6) est éloigné du rail de guidage (8) et l'outil (1) peut être retiré du rail de guidage (8), respectivement être installé sur celui-ci, la poignée de manutention au nombre d'au moins une (3) comportant un dispositif de déverrouillage (11) interdisant un actionnement involontaire du dispositif de réglage (9) dans une position verrouillée, **caractérisé en ce que** le dispositif de déverrouillage (11) comprend un moyen d'actionnement (12) tournant autour de l'axe (20) d'une portion de la poignée de manutention (3), un moyen de transmission (13) et un moyen de déverrouillage (14), le mouvement de rotation du moyen d'actionnement (12) étant transmissible au moyen de déverrouillage (14) par l'intermédiaire du moyen de transmission (13).

2. Outil selon la revendication 1, **caractérisé en ce que** le moyen d'actionnement (12) comprend une pièce tournante (16) solidaire en rotation d'une partie de commande (17), le moyen de transmission (13) étant relié à la partie de commande (17).

3. Outil selon la revendication 2, **caractérisé en ce que** la pièce tournante (16) comporte une pièce de positionnement (18) qui fait saillie sensiblement perpendiculairement à l'axe (20) d'une portion de la poignée de manutention (3).

4. Outil selon une des revendications 1 à 3, **caractérisé en ce que** le moyen de déverrouillage (14) comprend au moins un élément d'encliquetage (26) et un élément d'encliquetage antagoniste (27) relié au moyen de transmission (13), une piste de guidage (28) pour l'élément d'encliquetage au nombre d'au moins un (26) étant optionnellement prévue sur l'élément d'encliquetage antagoniste (27).

5. Outil selon la revendication 4, **caractérisé en ce que** l'élément d'encliquetage antagoniste (27) est précontraint dans la position verrouillée au moyen d'au moins un élément de ressort (29).

6. Outil selon une des revendications 1 à 5, **caractérisé en ce que** le moyen de transmission (13) est une transmission Bowden (30).

7. Outil selon une des revendications 1 à 6, **caractérisé en ce que** la poignée de manutention au nombre d'au moins une (3) est conformée sensiblement en U avec une première branche (21) et une seconde branche (22) ainsi qu'avec une portion de liaison (23) reliant les deux branches (21, 22).

8. Outil selon la revendication 7, **caractérisé en ce que** le moyen d'actionnement (12) est prévu dans la zone d'extrémité libre de la première branche (21) et le moyen de déverrouillage (14) est prévu dans la zone d'extrémité libre de la seconde branche (22) de la poignée de manutention (3).

9. Outil selon la revendication 7 ou 8, **caractérisé en ce que** la seconde branche (22) de la poignée de manutention (3) comprend, pour la poignée de manutention (3), un axe de rotation (24) s'étendant parallèlement au plan défini par l'élément de construction (35).
